# EUROPÄISCHE PATENTSCHRIFT

(11) **EP 3 974 144 B1**
(45) Veröffentlichungstag und Bekanntmachung des Hinweises auf die Patenterteilung: **07.08.2024**
(21) Anmeldenummer: 20198472.1
(22) Anmeldetag: 25.09.2020
(51) Int. Cl.: B29C 31/06, B29C 48/08, B29C 48/10, B29C 48/275, B29C 48/285, B29C 48/405, B29B 17/00, B29L 7/00, B29B 17/04, B29B 7/48, B29B 7/60, B29B 7/66, B29B 7/84, B29B 7/86, B29B 7/88, B29C 48/00, B29C 48/693, B29C 48/76, B29C 48/92, B29K 105/26

(54) **VERFAHREN UND WIEDERAUFBEREITUNGSANLAGE ZUR WIEDERAUFBEREITUNG VON FOLIEN-ABFALLMATERIAL**
METHOD AND REPROCESSING INSTALLATION FOR REPROCESSING OF FOIL WASTE MATERIAL
PROCÉDÉ ET INSTALLATION DE RECYCLAGE DESTINÉS AU RECYCLAGE DES DÉCHETS FEUILLES

(43) Veröffentlichungstag der Anmeldung: 30.03.2022
(73) Patentinhaber: Coperion GmbH, 70469 Stuttgart (DE)
(72) Erfinder: MATTA, Marina, 75050 Gemmingen (DE); SCHOFER, Jochen, 70435 Stuttgart (DE); LIBER, Leonid, 71277 Rutesheim (DE)
(74) Vertreter: Rau, Schneck & Hübner Patentanwälte Rechtsanwälte PartGmbB

(56) Entgegenhaltungen:
- WO-A1-2019/186311
- GB-A- 2 333 995
- JP-A- 2001 301 009
- JP-A- H07 205 147
- US-A1- 2007 161 719

## Beschreibung

Die Erfindung betrifft ein Verfahren und eine Wiederaufbereitungsanlage zur Wiederaufbereitung von Folien-Abfallmaterial.

Bei der Herstellung von Folien entsteht Abfallmaterial, das nicht für den Verkauf geeignet ist. Dieses Folien-Abfallmaterial muss aufwändig entsorgt werden, was die Umwelt belastet und zu Entsorgungskosten führt.

Aus der JP H07-205147 A ist eine Vorrichtung zum Behandeln von Plastikabfall bekannt. Der Plastikabfall wird einem ersten Extruder als Folie und als Schüttgut zugeführt. In dem ersten Extruder wird der Plastikabfall aufgeschmolzen. Die Materialschmelze wird anschließend in einem zweiten Extruder entgast.

Aus der WO 2019/186311 A1 ist eine Vorrichtung zur Wiederaufbereitung von Folien-Abfallmaterial bekannt. Ein Extruder dient zur Herstellung einer Folie, die seitlich mittels einer Schneidvorrichtung zugeschnitten wird, wodurch Folien-Abfallmaterial entsteht. Das Folien-Abfallmaterial wird in den Extruder zur Herstellung der Folie zurückgeführt. Das Folien-Abfallmaterial wird dem Extruder mittels einer Transportvorrichtung über einen Schredder zugeführt.

Aus der US 2007/0161719 A1 ist ein Verfahren und eine Vorrichtung zum Wiederaufbereiten von Folien-Abfallmaterial bekannt. Das Folien-Abfallmaterial wird zerkleinert und zur Aufbereitung in einen Doppelschneckenextruder zugeführt.

Aus der JP 2001-301009 A ist ein Verfahren und eine Vorrichtung zur Herstellung einer Folie aus Folienabfällen bekannt. Zur Herstellung der Folie dient ein Extruder mit einem Doppeltrichter. Über eine äußere Kammer des Doppeltrichters wird Rohmaterial zugeführt, wohingegen über eine innere Kammer des Doppeltrichters Folien-Abfallmaterial zugeführt wird. Das Folien-Abfallmaterial wird mittels einer in der inneren Kammer angeordneten Förderschnecke zugeführt.

Aus der GB 2 333 995 A ist ein Verfahren zum Aufbringen einer Folie auf eine Platte bekannt.

Der Erfindung liegt die Aufgabe zugrunde, ein einfaches, kostengünstiges und umweltschonendes Verfahren zur Wiederaufbereitung von Folien-Abfallmaterial zu schaffen. Das Folien-Abfallmaterial soll insbesondere zu 100 % wiederaufbereitet werden, so dass eine Zerowaste-Produktion ermöglicht wird.

Diese Aufgabe wird durch ein Verfahren mit den Merkmalen des Anspruchs 1 gelöst. Das Folien-Abfallmaterial wird mittels einer Zerkleinerungsvorrichtung zu Recyclingmaterial zerkleinert. Das Folien-Abfallmaterial wird durch die Herstellung von Folien bereitgestellt. Die hergestellten Folien umfassen mindestens eine Schicht, vorzugsweise mehrere Schichten. Beispielsweise sind die Folien als Verbundfolien ausgebildet. Die Folien umfassen insbesondere mindestens ein Polymermaterial, vorzugsweise mehrere Polymermaterialien. Das Folien-Abfallmaterial umfasst beispielsweise Polyamid (PA), Polyethylen (PE) und/oder EthylenVinylalkohol-Copolymere (EVOH). Die Zerkleinerungsvorrichtung ist beispielsweise als Schredder ausgebildet. Die Zerkleinerungsvorrichtung umfasst insbesondere mindestens ein Messer, vorzugsweise mehrere Messer.

Das mindestens eine Messer bzw. die mehreren Messer sind insbesondere drehangetrieben. Die mehreren Messer sind vorzugweise in entgegengesetzten Richtungen drehangetrieben.

Das Recyclingmaterial wird anschließend mittels einer Zuführvorrichtung in eine Mehrwellenschneckenmaschine zugeführt. Die Mehrwellenschneckenmaschine ist insbesondere als gleichsinnig rotierende Zweiwellenschneckenmaschine ausgebildet. Die Mehrwellenschneckenmaschine umfasst ein Gehäuse mit mehreren darin ausgebildeten Gehäusebohrungen. In den Gehäusebohrungen sind Behandlungselementwellen angeordnet. Die Behandlungselementwellen sind um zugehörige Drehachsen drehantreibbar. Die Behandlungselementwellen sind insbesondere gleichsinnig, also in gleichen Drehrichtungen, drehantreibbar und/oder dicht kämmend ausgebildet. Das Drehantreiben der Behandlungselementwellen erfolgt mittels eines Antriebsmotors über ein Verzweigungsgetriebe. Die Mehrwellenschneckenmaschine hat einen Schneckenaußendurchmesser Dₐ₂ und einen Schneckeninnendurchmesser Dᵢ₂, wobei vorzugweise gilt: Dₐ₂/Dᵢ₂ ≥ 1,5, insbesondere Dₐ₂/Dᵢ₂ ≥ 1,55, und insbesondere Dₐ₂/Dᵢ₂ ≥ 1,6. Es gilt insbesondere 1,5 ≤ Dₐ₂/Dᵢ₂ ≤ 1,9.

Das Recyclingmaterial wird mittels der Mehrwellenschneckenmaschine zu einer Materialschmelze plastifiziert. Anschließend wird die Materialschmelze mittels der Mehrwellenschneckenmaschine aufbereitet. Das Plastifizieren und/oder das Aufbereiten kann insbesondere die Schritte Einmischen, Aufschmelzen, Homogenisieren und/oder Entgasen umfassen. In die Mehrwellenschneckenmaschine kann mindestens ein Additiv zugeführt werden. Vorzugsweise wird das mindestens eine Additiv während des Plastifizierens und/oder während des Aufbereitens in die Materialschmelze eingemischt. Das mindestens eine Additiv umfasst insbesondere Talkum, Füllstoffe, Virginmaterial, Stabilisatoren, beispielsweise Antioxidantien und/oder UV-Stabilisatoren, Farbstoffe und/oder Masterbatche. Das mindestens eine Additiv wird insbesondere mittels einer Dosiereinrichtung und/oder einer Zuführschneckenmaschine zugeführt. Die Zuführschneckenmaschine ist beispielsweise als Seitenbeschickungsschneckenmaschine ausgebildet. Die Seitenbeschickungsschneckenmaschine ist insbesondere zweiwellig ausgebildet. Vorzugsweise ist ein Schneckenaußendurchmesser der Zuführschneckenmaschine höchstens gleich einem Schneckenaußendurchmesser der Mehrwellenschneckenmaschine. Das durch das Aufbereiten entstehende Rohmaterial kann wieder zur Herstellung von Folien verwendet werden. Das Rohmaterial wird beispielsweise granuliert und als Granulat und/oder unmittelbar einer Folien-Herstellungsanlage zugeführt.

Das Verfahren zur Wiederaufbereitung von Folien-Abfallmaterial ist insbesondere Teil eines Kreislaufs bzw. eines Kreislaufverfahrens. Das Kreislaufverfahren umfasst vorzugsweise die Schritte:
- Zuführen von Rohmaterial in eine Folien-Herstellungsanlage,
- Herstellung einer Folie und damit einhergehend Bereitstelen von Folien-Abfallmaterial,
- Wiederaufbereitung des Folien-Abfallmaterials nach dem erfindungsgemäßen Verfahren, und
- Zuführen des aufbereiteten Rohmaterials in die Folien-Herstellungsanlage.

Durch das Aufbereiten kann bis zu 100 %, insbesondere ein Anteil von 20 % bis 80 %, und insbesondere ein Anteil von 40 % bis 60 % des aufbereiteten Rohmaterials der Herstellung von Folien zugeführt werden. Der Anteil an dem wiederaufbereiteten Rohmaterial ist bei der Herstellung von Folien einstellbar. Der Anteil von Polyethylen zu Polyamid kann gesteuert werden. Der Einsatz von teurem Polyamid kann reduziert werden. Das wiederaufbereitete Rohmaterial (Recyclat) ist flexibel einsetzbar, da die Qualität des wiederaufbereiteten Rohmaterials hoch ist und das wiederaufbereitete Rohmaterial somit in vielen Produkten einsetzbar ist.

Die Zuführschneckenmaschine ermöglicht in einfacher Weise das Zuführen des Recyclingmaterials in die Mehrwellenschneckenmaschine. Die Zuführschneckenmaschine ist insbesondere als Seitenbeschickungsschneckenmaschine ausgebildet. Die Seitenbeschickungsschneckenmaschine ist mit der Mehrwellenschneckenmaschine verbunden und mündet seitlich in die Mehrwellenschneckenmaschine.

Die Zuführschneckenmaschine umfasst ein Gehäuse, in dem mindestens zwei Gehäusebohrungen ausgebildet sind. In den Gehäusebohrungen ist jeweils eine Schneckenwelle um eine Drehachse drehantreibbar angeordnet. Die Schneckenwellen sind insbesondere gleichsinnig drehantreibbar. Zum Antreiben der Schneckenwellen dienen ein Antriebsmotor und ein Verzweigungsgetriebe. Die Schneckenwellen können in einem Axialschnitt betrachtet konisch ausgebildet sein. Ferner können die Schneckenwellen im Querschnitt betrachtet ein Kastenprofil und/oder ein Schubkantenprofil haben. Die Zuführschneckenmaschine ist insbesondere zweiwellig ausgebildet.

Dadurch, dass die Zuführ-Schneckenmaschine eine freie Querschnittsfläche A₁ und die Mehrwellenschneckenmaschine eine freie Querschnittsfläche A₂ haben, wobei A₁ > A₂ gilt, ist eine einfache, kostengünstige und umweltschonende Wiederaufbereitung gewährleistet. Dadurch, dass die freie Querschnittfläche A₁ der Zuführschneckenmaschine größer als die freie Querschnittsfläche A₂ der Mehrwellenschneckenmaschine ist, kann das Recyclingmaterial in einfacher Weise der Mehrwellenschneckenmaschine zugeführt werden. Als freie Querschnittsfläche wird allgemein die freie Fläche zwischen dem Gehäuse bzw. einer Gehäuseinnenwand und den Behandlungselementwellen bzw. den Schneckenwellen definiert.

Ein Verfahren nach Anspruch 2 gewährleistet eine einfache, kostengünstige und umweltschonende Wiederaufbereitung. Dadurch, dass das Zerkleinern höchstens bei der Temperatur T erfolgt, wird ein Aufschmelzen und/oder eine Degradation des Folien-Abfallmaterials vermieden. Die Temperatur T liegt insbesondere unterhalb einer Schmelztemperatur und/oder eine Degradationstemperatur des Folien-Abfallmaterials. Vorzugsweise wird das Folien-Abfallmaterial vor dem Zerkleinern und/oder während des Zerkleinerns gekühlt. Vorzugsweise wird das Folien-Abfallmaterial in der Zerkleinerungsvorrichtung gekühlt. Die Zerkleinerungsvorrichtung weist beispielsweise gekühlte Walzen bzw. Wellen mit daran angeordneten Messern auf.

Ein Verfahren nach Anspruch 3 gewährleistet eine einfache, kostengünstige und umweltschonende Wiederaufbereitung. Die Schüttdichte p ermöglicht eine einfache Weiterverarbeitung des Recyclingmaterials. Das Recyclingmaterial ist insbesondere als Flocken (Flakes), Schnipsel und/oder Gewölle ausgebildet.

Ein Verfahren nach Anspruch 4 gewährleistet eine einfache, kostengünstige und umweltschonende Wiederaufbereitung. Die Siebgröße S gewährleistet eine einfache Weiterverarbeitung des Recyclingmaterials. Die Siebgröße S charakterisiert die Maschenweite des Siebs. Das Sieb ist insbesondere in die Zerkleinerungsvorrichtung integriert. Die Zerkleinerungsvorrichtung umfasst vorzugsweise eine Rückführung zum erneuten Zerkleinern von Recyclingmaterial, das das Sieb nicht passiert hat.

Ein Verfahren nach Anspruch 5 gewährleistet eine einfache, kostengünstige und umweltschonende Wiederaufbereitung. Die Fördereinrichtung fördert das Recyclingmaterial von der Zerkleinerungsvorrichtung zu der Mehrwellenschneckenmaschine. Die Fördereinrichtung ist vorzugsweise pneumatisch ausgebildet. Die Fördereinrichtung umfasst insbesondere eine Förderleitung und/oder eine Luftstromerzeugungseinrichtung, beispielsweise ein Gebläse. Vorzugsweise dient die Fördereinrichtung zum Fördern des Recyclingmaterials von der Zerkleinerungsvorrichtung zu einer Dosiereinrichtung. Hierzu läuft insbesondere eine Förderleitung von der Zerkleinerungsvorrichtung zu der Dosiereinrichtung.

Ein Verfahren nach Anspruch 6 gewährleistet eine einfache, kostengünstige und umweltschonende Wiederaufbereitung. Die Dosiereinrichtung ermöglicht ein exaktes Dosieren des Recyclingmaterials zum anschließenden Zuführen in die Mehrwellenschneckenmaschine. Die Dosiereinrichtung ist gravimetrisch oder volumetrisch ausgebildet. Die gravimetrische Dosiereinrichtung umfasst insbesondere eine Waage, vorzugsweise eine Bandwaage. Die gravimetrische Dosiereinrichtung eignet sich insbesondere zum Wiegen des fluffigen bzw. luftigen Recyclingmaterials. Die Dosiereinrichtung mündet insbesondere in eine Zuführschneckenmaschine.

Ein Verfahren nach Anspruch 7 gewährleistet eine einfache, kostengünstige und umweltschonende Wiederaufbereitung.

Ein Verfahren nach Anspruch 8 gewährleistet eine einfache, kostengünstige und umweltschonende Wiederaufbereitung. Dadurch, dass der Schneckenaußendurchmesser Dₐ₁ der Zuführschneckenmaschine mindestens so groß wie der Schneckenaußendurchmesser Dₐ₂ der Mehrwellenschneckenmaschine ist, wird ein einfaches Zuführen des Recyclingmaterials in die Mehrwellenschneckenmaschine ermöglicht. Je größer Dₐ₁/Dₐ₂ ist, desto größer ist insbesondere auch ein Verhältnis einer freien Querschnittsfläche A₁ der Zuführschneckenmaschine zu einer freien Querschnittsfläche A₂ der Mehrwellenschneckenmaschine.

Ein Verfahren nach Anspruch 9 gewährleistet eine einfache, kostengünstige und umweltschonende Wiederaufbereitung. Je größer Dₐ₁/Dᵢ₁ ist, desto größer ist eine freie Querschnittsfläche A₁ der Zuführschneckenmaschine. Ein größeres Dₐ₁/Dᵢ₁ vereinfacht das Zuführen des Recyclingmaterials. Es gilt insbesondere: 2,0 ≤ Dₐ₁/Dᵢ₁ ≤ 2,9.

Ein Verfahren nach Anspruch 10 gewährleistet eine einfache, kostengünstige und umweltschonende Wiederaufbereitung. Durch die Saugeinrichtung wird das luftige Recyclingmaterial verdichtet. Die Saugeinrichtung ist insbesondere an eine Zuführschneckenmaschine angeschlossen. Die Saugeinrichtung umfasst insbesondere eine Vakuumpumpe und mindestens einen Filter. Der mindestens eine Filter ist zwischen den Gehäusebohrungen der Zuführschneckenmaschine und der Vakuumpumpe angeordnet, so dass Luft aus dem Recyclingmaterial gesaugt wird und das verdichtete Recyclingmaterial in der Zuführschneckenmaschine bzw. den Gehäusebohrungen verbleibt. Vorzugsweise ist der mindestens eine Filter als Filtereinsatz ausgebildet und in dem Gehäuse der Zuführschneckenmaschine angeordnet.

Ein Verfahren nach Anspruch 11 gewährleistet eine einfache, kostengünstige und umweltschonende Wiederaufbereitung. Das Entgasen erfolgt während des Plastifizierens und/oder während des Aufbereitens und/oder Austragens. Insbesondere erfolgt das Entgasen nach dem Plastifizieren während des Homogenisierens und/oder des Compoundierens bzw. Aufbereitens und/oder Austragens. Zum Entgasen wird vorzugsweise ein Schleppmittel verwendet, beispielsweise Wasser. Das Entgasen erfolgt mittels einer Entgasungseinrichtung, insbesondere einer Vakuum-Entgasungseinrichtung. Das Entgasen erfolgt bei einem absoluten Druck p, wobei gilt: 1 mbar ≤ p ≤ 100 mbar, insbesondere 1 mbar ≤ p ≤ 20 mbar. Die Entgasungseinrichtung umfasst vorzugsweise eine Vakuumpumpe und/oder einen Abscheider. Der Abscheider ist insbesondere gekühlt. Der Abscheider dient vorzugsweise zum Abscheiden von Ethylen-Vinylalkohol-Copolymeren und/oder zum Abscheiden von Wasser.

Ein Verfahren nach Anspruch 12 gewährleistet eine einfache, kostengünstige und umweltschonende Wiederaufbereitung. Durch die kurze mittlere Verweilzeit tv des Recyclingmaterials bzw. der Materialschmelze bzw. des aufbereiteten Rohmaterials in der Mehrwellenschneckenmaschine wird eine Degradierung des Recyclingmaterials bzw. der Materialschmelze bzw. des Rohmaterials vermieden, so dass das Rohmaterial die Herstellung von Folien mit höchsten Qualitätsstandards ermöglicht. Die mittlere Verweilzeit ist beispielsweise mittels Farbindikatoren ermittelbar.

Ein Verfahren nach Anspruch 13 gewährleistet eine einfache, kostengünstige und umweltschonende Wiederaufbereitung. Das Filtern gewährleistet eine hohe Qualität und/oder Homogenität des Rohmaterials. Das Filtern erfolgt vorzugsweise mittels mindestens eines Schmelzefilters. Vorzugsweise ist die Filtervorrichtung als Siebwechsler mit mindestens zwei Schmelzefiltern ausgebildet.

Der Erfindung liegt ferner die Aufgabe zugrunde, eine Wiederaufbereitungsanlage zur einfachen, kostengünstigen und umweltschonenden Wiederaufbereitung von Folien-Abfallmaterial zu schaffen.

Diese Aufgabe wird durch eine Wiederaufbereitungsanlage mit den Merkmalen des Anspruchs 14 gelöst. Die Vorteile der erfindungsgemäßen Wiederaufbereitungsanlage entsprechen den bereits beschriebenen Vorteilen des erfindungsgemäßen Verfahrens. Die Wiederaufbereitungsanlage kann insbesondere auch mit mindestens einem Merkmal weitergebildet werden, das in Zusammenhang mit den Ansprüchen 1 bis 13 und dem erfindungsgemäßen Verfahren beschrieben ist.

Die Wiederaufbereitungsanlage ist vorzugweise Teil einer Kreislauf-Produktionsanlage (Closed-Loop-Produktionsanlage). Die Kreislauf-Produktionsanlage umfasst eine Folien-Herstellungsanlage und die erfindungsgemäße Wiederaufbereitungsanlage. Folien-Abfallmaterial, das in der Folien-Herstellungsanlage anfällt, wird der Wiederaufbereitungsanlage zugeführt. Das in der Wiederaufbereitungsanlage erzeugte Rohmaterial wird, ggf. mit weiterem Rohmaterial (Virginmaterial), der Folien-Herstellungsanlage zugeführt.

Weitere Merkmale, Vorteile und Einzelheiten der Erfindung ergeben sich aus der nachfolgenden Beschreibung eines Ausführungsbeispiels. Es zeigen:

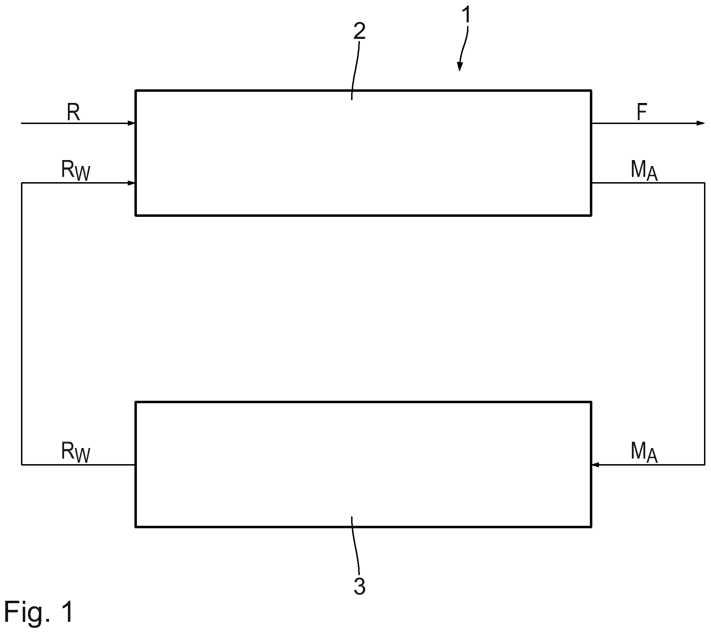

- Fig. 1: eine schematische Ansicht einer Kreislauf-Produktionsanlage mit einer Folien-Herstellungsanlage und einer Wiederaufbereitungsanlage zur Wiederaufbereitung von Folien-Abfallmaterial,

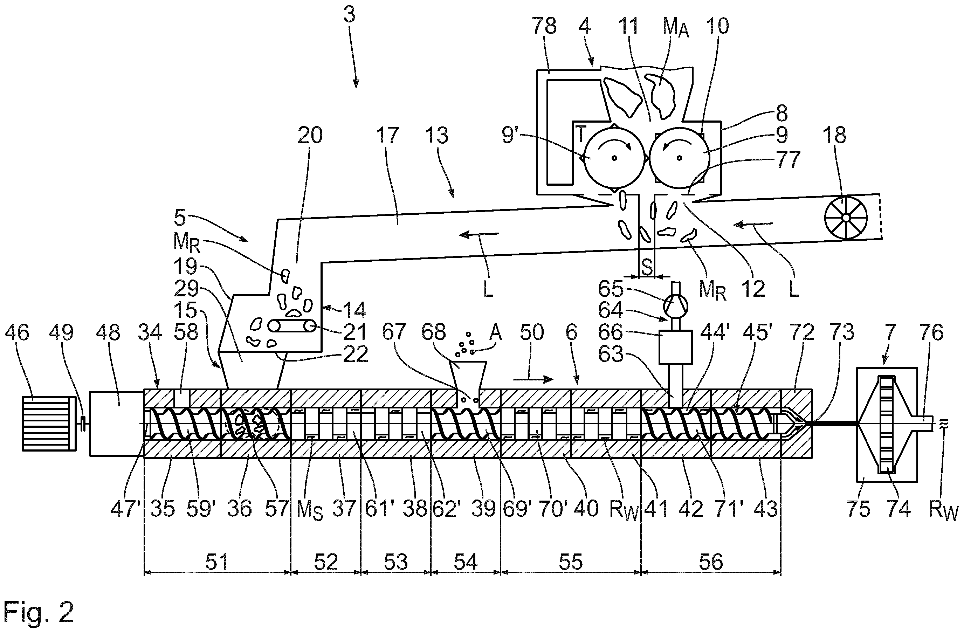

- Fig. 2: eine schematische und teilweise geschnittene Ansicht der Wiederaufbereitungsanlage mit einer Zerkleinerungsvorrichtung, einer Zuführvorrichtung, einer Mehrwellenschneckenmaschine und einer Filtervorrichtung,

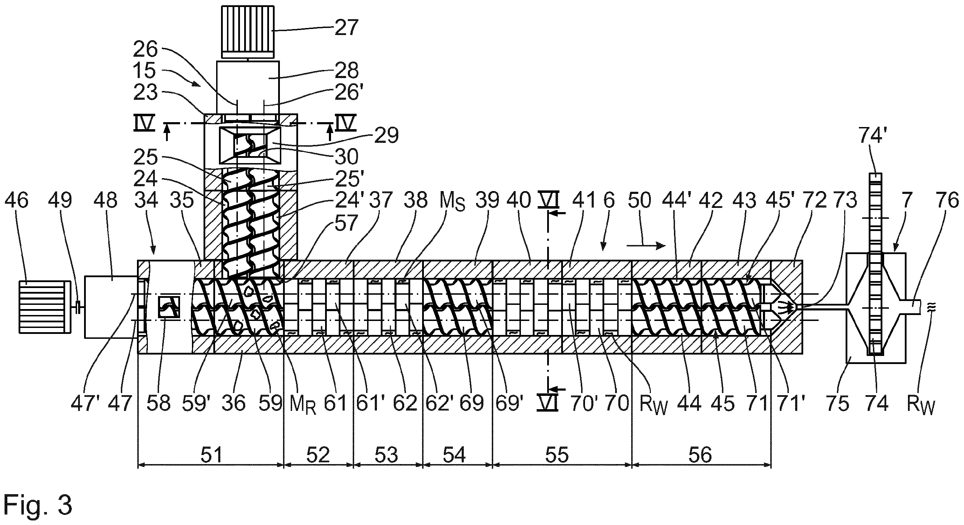

- Fig. 3: eine schematische und teilweise geschnittene Draufsicht auf die Wiederaufbereitungsanlage mit einer Zuführschneckenmaschine der Zuführvorrichtung, der Mehrwellenschneckenmaschine und der Filtervorrichtung,
- Fig. 4: einen Schnitt durch die Zuführschneckenmaschine entlang der Schnittlinie IV-IV in Fig. 3,

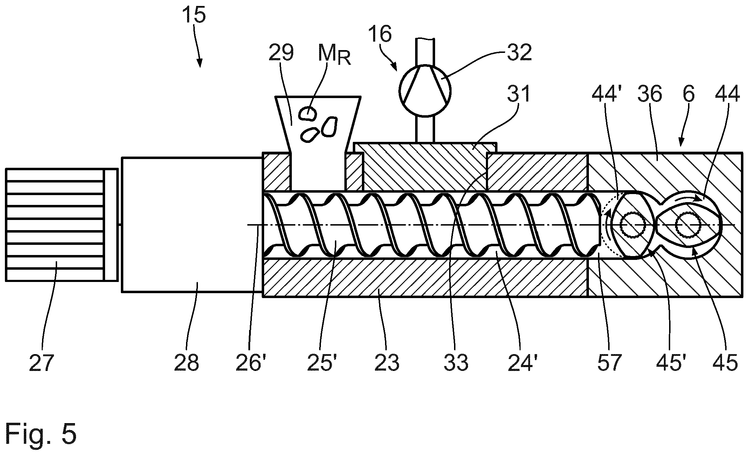

- Fig. 5: eine teilweise geschnittene Seitenansicht der Zuführschneckenmaschine zur Veranschaulichung einer Saugeinrichtung, und
- Fig. 6: einen Schnitt durch die Mehrwellenschneckenmaschine entlang der Schnittlinie VI-VI in Fig. 3.

Eine Kreislauf-Produktionsanlage 1 umfasst eine Folien-Herstellungsanlage 2 und eine Wiederaufbereitungsanlage 3. Die Folien-Herstellungsanlage 2 dient zur Herstellung von Folien F aus nicht wiederaufbereitetem Rohmaterial R (Virginmaterial) und aus aufbereitetem Rohmaterial Rw. Die Folien-Herstellungsanlage 2 ist üblich ausgebildet. Bei der Herstellung der Folien F anfallendes Folien-Abfallmaterial M_{A} wird der Wiederaufbereitungsanlage 3 zugeführt. Die Wiederaufbereitungsanlage 3 dient zur Wiederaufbereitung des Folien-Abfallmaterials M_{A} zu Rohmaterial Rw. Das Rohmaterial Rw wird anteilig zusammen mit dem Rohmaterial R der Folien-Herstellungsanlage 2 zugeführt.

Die Wiederaufbereitungsanlage 3 umfasst eine Zerkleinerungsvorrichtung 4, eine Zuführvorrichtung 5, eine Mehrwellenschneckenmaschine 6 und eine Filtervorrichtung 7.

Die Zerkleinerungsvorrichtung 4 dient zum Zerkleinern des Folien-Abfallmaterials M_{A} zu Recyclingmaterial M_{R}. Die Zerkleinerungsvorrichtung 4 umfasst ein Gehäuse 8, in dem zwei Walzen 9, 9' mit daran angeordneten Messern 10 um Drehachsen drehbar gelagert sind. Die Walzen 9, 9' werden mittels nicht näher dargestellten Antriebsmotoren in entgegengesetzten Drehrichtungen drehangetrieben. Zum Zuführen des Folien-Abfallmaterials M_{A} ist in dem Gehäuse 8 eine Zuführöffnung 11 ausgebildet. Die Zuführöffnung 11 kann zur Versorgung mit Folien-Abfallmaterial M_{A} mit der Folien-Herstellungsanlage 2 verbunden sein. In dem Gehäuse 8 ist ferner eine Abführöffnung 12 ausgebildet, durch die das Recyclingmaterial M_{R} der Zuführvorrichtung 5 zugeführt wird. Die Zerkleinerungsvorrichtung 4 ist beispielsweise als Schredder ausgebildet.

Die Zerkleinerungsvorrichtung 4 umfasst ein Sieb 77. Das Sieb 77 ist in das Gehäuse 8 integriert. Das Sieb 77 ist zwischen den Walzen 9, 9' und der Abführöffnung 12 angeordnet. Das Sieb hat eine Siebgröße S, wobei gilt: 1 mm ≤ S ≤ 50 mm, insbesondere 5 mm ≤ S ≤ 35 mm, und insbesondere 10 mm ≤ S ≤ 20 mm. Zum Erzeugen von Vibrationen ist das Sieb 77 mit einem nicht näher dargestellten Vibrationsmechanismus gekoppelt. Zum Zurückführen von Recyclingmaterial M_{R}, das das Sieb 77 nicht passiert hat, umfasst die Zerkleinerungsvorrichtung 4 eine Rückführung 78. Mittels der Rückführung 78 wird Recyclingmaterial M_{R}, das das Sieb 77 nicht passiert und auf dem Sieb 77 verbleibt, vor die Walzen 9, 9' zurücktransportiert, so dass dieses Recyclingmaterial M_{R} erneut zerkleinert wird. Das Zurückführen erfolgt beispielsweise pneumatisch.

Die Zuführvorrichtung 5 umfasst eine pneumatische Fördereinrichtung 13, eine gravimetrische Dosiereinrichtung 14, eine Zuführschneckenmaschine 15 und eine Saugeinrichtung 16.

Die pneumatische Fördereinrichtung 13 umfasst eine Förderleitung 17, in die die Abführöffnung 12 mündet. Die Förderleitung 17 ist an eine Luftstromerzeugungseinrichtung 18 angeschlossen. Die Luftstromerzeugungseinrichtung 18 ist beispielsweise ein Gebläse. Die Luftstromerzeugungseinrichtung 18 erzeugt in der Förderleitung 17 einen Luftstrom L zum pneumatischen Fördern des Recyclingmaterials M_{R} von der Zerkleinerungsvorrichtung 4 zu der gravimetrischen Dosiereinrichtung 14.

Die gravimetrische Dosiereinrichtung 14 umfasst ein Gehäuse 19, in dem eine Zuführöffnung 20 ausgebildet ist. Die Förderleitung 17 mündet in die Zuführöffnung 20. In dem Gehäuse 19 ist eine Bandwaage 21 angeordnet. Die Bandwaage 21 dient zum Wiegen und dosierten Zuführen des Recyclingmaterials M_{R} zu der Zuführschneckenmaschine 15. Hierzu ist in dem Gehäuse 19 eine Abführöffnung 22 ausgebildet.

Die Zuführschneckenmaschine 15 ist als Seitenbeschickungsschneckenmaschine ausgebildet. Die Zuführschneckenmaschine 15 umfasst ein Gehäuse 23, in dem zwei einander durchdringende Gehäusebohrungen 24, 24' ausgebildet sind. Die Gehäusebohrungen 24, 24' haben im Querschnitt die Form einer liegenden Acht. In den Gehäusebohrungen 24, 24' sind zugehörige Schneckenwellen 25, 25' um Drehachsen 26, 26' drehbar angeordnet. Zum Drehantreiben der Schneckenwellen 25, 25' umfasst die Zuführschneckenmaschine 15 einen Antriebsmotor 27 und ein Verzweigungsgetriebe 28. Zum Zuführen des Recyclingmaterials M_{R} umfasst die Zuführschneckenmaschine 15 einen Trichter 29, der in eine in dem Gehäuse 23 ausgebildete Zuführöffnung 30 mündet. Die Schneckenwellen 25, 25' werden mittels des Antriebsmotors 27 und des Verzweigungsgetriebes 28 in gleichen Drehrichtungen drehangetrieben.

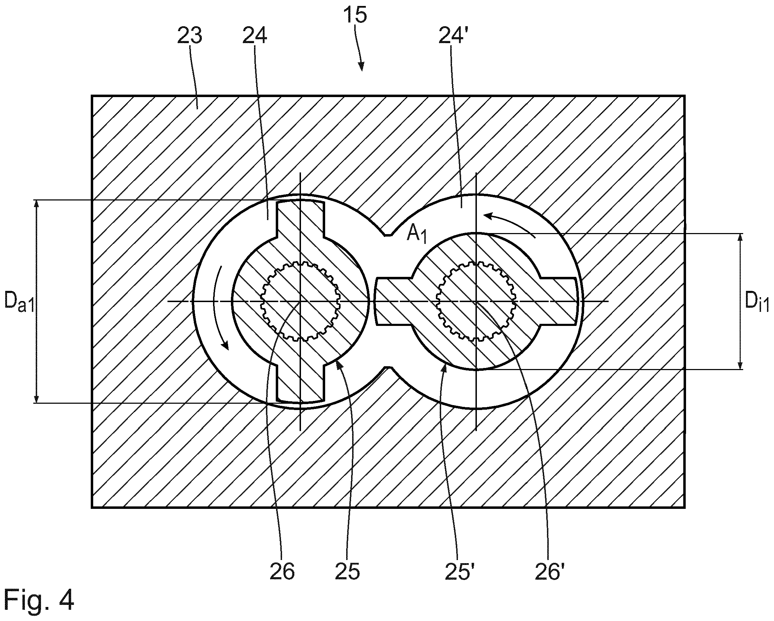

Die Schneckenwellen 25, 25' haben einen Schneckenaußendurchmesser Dₐ₁ und einen Schneckeninnendurchmesser Dᵢ₁, wobei gilt: Dₐ₁/Dᵢ₁ ≥ 1,7, insbesondere Dₐ₁/Dᵢ₁ ≥ 1,8, und insbesondere Dₐ₁/Dᵢ₁ ≥ 1,9. Die Schneckenwellen 25, 25' haben im Querschnitt betrachtet ein Kastenprofil. Das Kastenprofil ist in Fig. 4 veranschaulicht. Durch das Kastenprofil wird eine freie Querschnittsfläche A₁ der Zuführschneckenmaschine 15 erhöht. Die freie Querschnittsfläche A₁ ist die Querschnittfläche zwischen dem Gehäuse 23 und den Schneckenwellen 25, 25'. Die freie Querschnittsfläche A₁ ist in Fig. 4 veranschaulicht.

Die Saugeinrichtung 16 dient zum Verdichten des Recyclingmaterials M_{R}. Die Saugeinrichtung 16 umfasst einen Filtereinsatz 31 und eine Vakuumpumpe 32. Die Vakuumpumpe 32 ist an den Filtereinsatz 31 angeschlossen. Der Filtereinsatz 31 umfasst einen rahmenförmigen Grundkörper und mindestens ein darin angeordnetes Filterelement. Der Filtereinsatz 31 ist beispielsweise entsprechend der DE 10 2013 208 993 A1 ausgebildet. Der Filtereinsatz 31 ist in einer Durchgangsöffnung 33 des Gehäuses 23 angeordnet. Die Vakuumpumpe 32 ist über den Filtereinsatz 31 in Strömungsverbindung mit den Gehäusebohrungen 24, 24'. Hierdurch ist eine Absaugung von Luft aus den Gehäusebohrungen 24, 24' bzw. ein Entlüften der Gehäusebohrungen 24, 24' möglich.

Die Mehrwellenschneckenmaschine 6 dient zum Plastifizieren des Recyclingmaterials M_{R} zu einer Materialschmelze Ms und zum Aufbereiten der Materialschmelze M_{S} zu dem Rohmaterial R_{W}. Die Mehrwellenschneckenmaschine 6 ist als gleichsinnig rotierende Zweiwellenschneckenmaschine ausgebildet. Die Mehrwellenschneckenmaschine 6 umfasst ein Gehäuse 34 aus mehreren nacheinander angeordneten Gehäuseabschnitten 35 bis 43. Die Gehäuseabschnitte 35 bis 43 sind zur Ausbildung des Gehäuses 34 miteinander verbunden. In dem Gehäuse 34 sind zwei zueinander parallele und einander durchdringende Gehäusebohrungen 44, 44' ausgebildet, die im Querschnitt die Form einer liegenden Acht haben. In den Gehäusebohrungen 44, 44' sind konzentrisch zwei Behandlungselementwellen 45, 45' angeordnet, die von einem Antriebsmotor 46 um zugehörige Drehachsen 47, 47' drehantreibbar sind. Zwischen den Behandlungselementwellen 45, 45' und dem Antriebsmotor 46 sind ein Verzweigungsgetriebe 48 und eine Kupplung 49 angeordnet. Die Behandlungselementwellen 45, 45' werden mittels des Antriebsmotors 46 gleichsinnig, also in gleichen Drehrichtungen um die Drehachsen 47, 47' drehangetrieben.

Die Mehrwellenschneckenmaschine 6 weist in einer Förderrichtung 50 nacheinander eine Einzugszone 51, eine Plastifizierzone 52, eine Homogenisierungszone 53, eine Zuführzone 54, eine Mischzone 55 und eine Austragszone 56 auf.

In der Einzugszone 51 weist der Gehäuseabschnitt 36 seitlich eine Zuführöffnung 57 auf. Die Zuführöffnung 57 hat im Querschnitt die Form einer liegenden Acht. Die Zuführschneckenmaschine 15 ist seitlich derart mit dem Gehäuse 34 verbunden, dass die Schneckenwellen 25, 25' in die Zuführöffnung 57 münden. In dem Gehäuseabschnitt 35 ist zum einfacheren Zuführen des Recyclingmaterials M_{R} eine Entlüftungsöffnung 58 ausgebildet. Die Behandlungselementwellen 45, 45' umfassen in der Einzugszone 51 Schneckenelemente 59, 59', die drehfest auf zugehörigen Wellen 60, 60' angeordnet sind und zum Fördern des Recyclingmaterials M_{R} dienen.

In der Plastifizierzone 52 erfolgt ein Aufschmelzen des Recyclingmaterials M_{R}. Zum Aufschmelzen sind in der Plastifizierzone 52 Knetelemente 61, 61' drehfest auf den Wellen 60, 60' angeordnet. Die Knetelemente 61, 61' sind als Knetscheiben ausgebildet. Vorzugsweise sind in der Plastifizierzone 52 Knetblöcke auf den Wellen 60, 60' angeordnet, die mehrere einteilig miteinander ausgebildete Knetscheiben umfassen. In der Plastifizierzone 52 wird das Recyclingmaterial zu der Materialschmelze Ms aufgeschmolzen.

In der Homogenisierungszone 53 wird die Materialschmelze Ms homogenisiert und entgast. In der Homogenisierungszone 53 sind auf den Wellen 60, 60' Knetelemente 62, 62' drehfest angeordnet. Die Knetelemente 62, 62' sind insbesondere als Knetscheiben ausgebildet. Vorzugsweise sind in der Homogenisierungszone 53 Knetblöcke angeordnet, die aus mehreren einteilig miteinander verbundenen Knetscheiben ausgebildet sind.

In der Zuführzone 54 werden Additive A zugeführt. Hierzu ist in dem Gehäuseabschnitt 39 eine Zuführöffnung 67 ausgebildet, in die ein Zuführtrichter 68 mündet. Die Additive A werden beispielsweise über eine nicht näher dargestellte gravimetrische Dosiereinrichtung in den Zuführtrichter 68 und/oder über eine nicht näher dargestellte Zuführschneckenmaschine in die Mehrwellenschneckenmaschine 6 zugeführt. In der Zuführzone 54 sind auf den Wellen 60, 60' Schneckenelemente 69, 69' drehfest angeordnet.

In der Mischzone 55 werden die Additive A aufgeschmolzen und in die Materialschmelze Ms eingemischt und die Mischung zu den Rohmaterial Rw homogenisiert. In der Mischzone 55 sind auf den Wellen 60, 60' Knetelemente 70, 70' drehfest angeordnet. Die Knetelemente 70, 70' sind vorzugsweise als Knetscheiben ausgebildet. In der Mischzone 55 sind beispielsweise Knetblöcke angeordnet, die aus einteilig miteinander verbundenen Knetscheiben ausgebildet sind.

In der Austragszone 56 sind Schneckenelemente 71, 71' auf den Wellen 60, 60' drehfest angeordnet, um das Rohmaterial Rw auszutragen. In dem Gehäuseabschnitt 42 ist eine Entgasungsöffnung 63 ausgebildet. Die Entgasungsöffnung 63 ist an eine Vakuum-Entgasungseinrichtung 64 angeschlossen, so dass das Rohmaterial Rw über die Entgasungsöffnung 63 mittels der Vakuum-Entgasungseinrichtung 64 entgast wird. Die Vakuum-Entgasungseinrichtung 64 umfasst eine Vakuumpumpe 65, die über einen Abscheider 66 an die Entgasungsöffnung 63 angeschlossen ist. Der Abscheider 66 ist mittels einer Kühlung gekühlt. An dem letzten Gehäuseabschnitt 43 ist eine das Gehäuse 34 abschließende Düsenplatte 72 angeordnet, die eine Austragsöffnung 73 ausbildet.

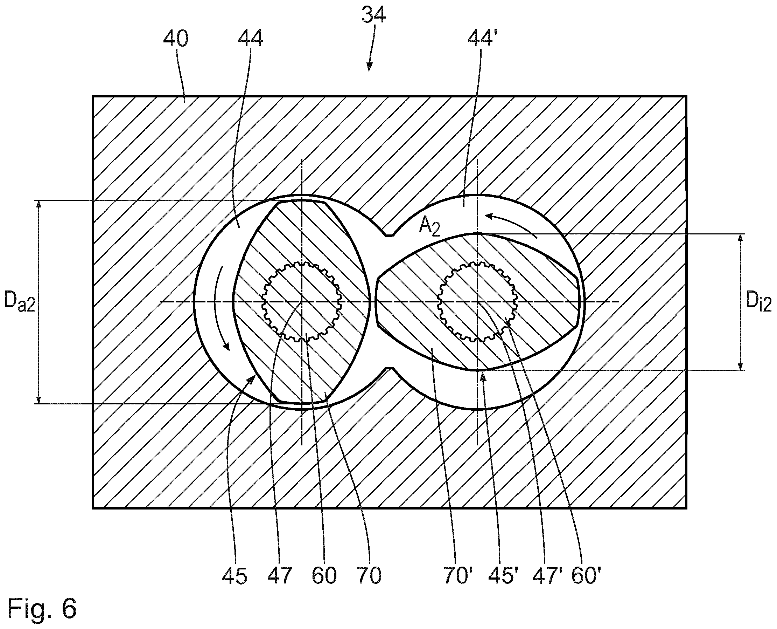

Die Behandlungselementwellen 45, 45' der Mehrwellenschneckenmaschine 6 haben einen Schneckenaußendurchmesser Dₐ₂ und einen Schneckeninnendurchmesser Dᵢ₂. Die Mehrwellenschneckenmaschine 6 hat eine freie Querschnittsfläche A₂. Die freie Querschnittsfläche A₂ ist die freie Fläche zwischen dem Gehäuse 34 und den Behandlungselementwellen 45, 45'. Die freie Querschnittsfläche A₂ ist in Fig. 6 veranschaulicht.

Für die freien Querschnittsflächen A₁ und A₂ gilt: A₁ > A₂, insbesondere 1,3≤A₁/A₂≤5, insbesondere 1,5 ≤A₁/A₂≤4, insbesondere 1,7≤A₁/A₂≤ 3,5, und insbesondere 1,8≤A₁/A₂≤3.

Für die Schneckenaußendurchmesser Dₐ₁ und Dₐ₂ gilt: Dₐ₁ ≥ Dₐ₂, insbesondere 1,05≤Dₐ₁/Dₐ₂≤1,9, insbesondere 1,1 ≤Dₐ₁/Dₐ₂≤1,7, und insbesondere 1,15≤Dₐ₁/Dₐ₂≤1,5.

Die Filtervorrichtung 7 ist an die Mehrwellenschneckenmaschine 6 angeschlossen und mit der Austragsöffnung 73 verbunden. Die Filtervorrichtung 7 ist als Siebwechsler ausgebildet. Die Filtervorrichtung 7 umfasst zwei Schmelzefilter 74, 74', die verschiebbar in einem Gehäuse 75 angeordnet sind. Über eine Austragsleitung 76 wird das gefilterte Rohmaterial Rw der Folien-Herstellungsanlage 2 zugeführt.

Nachfolgend ist die Wiederaufbereitung des Folien-Abfallmaterials M_{A} beschrieben:
Bei der Herstellung von Folien F mittels der Folien-Herstellungsanlage 2 fällt das Folien-Abfallmaterial M_{A} an. Das Folien-Abfallmaterial M_{A} wird mittels der Zerkleinerungsvorrichtung 4 zu dem Recyclingmaterial M_{R} zerkleinert. Die Messer 10 der gegensinnig drehangetriebenen Walzen 9, 9' zerschneiden das Folien-Abfallmaterial M_{A}. Das Recyclingmaterial M_{R} liegt als Schnipsel, Flocken und/oder Gewölle vor. Das Recyclingmaterial M_{R} hat eine Schüttdichte p, wobei gilt: 10 g/dm³ ≤ ρ ≤ 300 g/dm³, insbesondere 15 g/dm³ ≤ ρ ≤ 250 g/dm³, und insbesondere 20 g/dm³ ≤ ρ ≤ 200 g/dm³.

Das Zerkleinern erfolgt bei einer Temperatur T, wobei gilt: T ≤ 100 °C, insbesondere T ≤ 90 °C, insbesondere T ≤ 80 °C, und insbesondere T ≤ 70 °C. Falls erforderlich wird die Zerkleinerungsvorrichtung 4 bzw. das Folien-Abfallmaterial M_{A} gekühlt. Durch die Temperatur T wird eine Degradation des Folien-Abfallmaterials M_{A} vermieden. Die Temperatur T liegt unterhalb einer Schmelztemperatur bzw. einer Degradationstemperatur des Folien-Abfallmaterials M_{A}.

Nach dem Zerkleinern wird das Recyclingmaterial M_{R} mittels des Siebs 77 gesiebt. Das auf dem Sieb 77 verbleibende Recyclingmaterial M_{R} wird mittels der Rückführung 78 vor die Walzen 9, 9' zurücktransportiert und erneut zerkleinert.

Das Recyclingmaterial M_{R} wird anschließend mittels der pneumatischen Fördereinrichtung 13 von der Zerkleinerungsvorrichtung 4 zu der gravimetrischen Dosiereinrichtung 14 gefördert. In der gravimetrischen Dosiereinrichtung 14 wird das Recyclingmaterial M_{R} mittel der Bandwaage 21 gewogen und in einer gewünschten Dosierung über den Trichter 29 der Zuführschneckenmaschine 15 zugeführt.

Mittels der Saugeinrichtung 16 wird das Recyclingmaterial M_{R} in den Gehäusebohrungen 24, 24' verdichtet bzw. kompaktiert. Hierzu wird Luft aus den Gehäusebohrungen 24, 24' über den Filtereinsatz 31 mittels der Vakuumpumpe 32 abgeführt. Mittels der Schneckenwellen 25, 25' wird das verdichtete Recyclingmaterial M_{R} durch die Zuführöffnung 57 in die Gehäusebohrungen 44, 44' der Mehrwellenschneckenmaschine 6 zugeführt. Durch das Kastenprofil der Schneckenwellen 25, 25' weist die Zuführschneckenmaschine 15 eine vergleichsweise große freie Querschnittsfläche A₁ auf. Hierdurch kann das verdichtete Recyclingmaterial M_{R} mit einem vergleichsweise großen Durchsatz der Mehrwellenschneckenmaschine 6 zugeführt werden.

Das verdichtete Recyclingmaterial M_{R} gelangt in der Einzugszone 51 in die Gehäusebohrungen 44, 44' der Mehrwellenschneckenmaschine 6. In der Einzugszone 51 können Additive A zugeführt werden. Das Recyclingmaterial M_{R} wird in der Förderrichtung 50 zu der Plastifizierzone 52 gefördert. Aus dem Recyclingmaterial M_{R} entweichende Luft kann durch die Entlüftungsöffnung 58 abgeführt werden.

In der Plastifizierzone 52 wird das Recyclingmaterial M_{R} mittels der Knetelemente 61, 61' aufgeschmolzen und die Materialschmelze Ms in der anschließenden Homogenisierungszone 53 homogenisiert.

In der Zuführzone 54 werden über die Zuführöffnung 67 Additive A der Materialschmelze Ms zugeführt. Additive A sind beispielsweise Talkum, Füllstoffe, Virginmaterial, Stabilisatoren, Farbstoffe und/oder Masterbatche. Als Additiv A kann somit Rohmaterial R (Virginmaterial) zugeführt werden.

In der Mischzone 55 werden die Additive A aufgeschmolzen und in die Materialschmelze Ms eingemischt und die Mischung homogenisiert.

Aus der Materialschmelze M_{S} bzw. dem entstehenden Rohmaterial R_{W} entweichende Gase werden mittels der Vakuum-Entgasungseinrichtung 64 abgeführt. Das Entgasen erfolgt bei einem absoluten Druck p von 1 mbar bis 100 mbar. Die abgeführten Gase passieren den Abscheider 66. Der Abscheider 66 ist gekühlt. In dem Abscheider 66 werden Ethylen-Vinylalkohol-Copolymere (EVOH) und/oder Wasser abgeschieden. Zum effizienteren Entgasen kann ein Schleppmittel in die Gehäusebohrungen 44, 44' zugeführt werden. Als Schleppmittel kann beispielsweise Wasser zugeführt werden. Falls erforderlich, kann die Materialschmelze Ms vor Zuführung der Additive A entgast werden. Das Entgasen kann mittels einer Vakuum-Entgasungseinrichtung entsprechend der Vakuum-Entgasungseinrichtung 64 erfolgen.

Das entstehende Rohmaterial Rw wird anschließend über die Austragszone 56 durch die Austragsöffnung 73 aus der Mehrwellenschneckenmaschine 6 ausgetragen.

Das Recyclingmaterial M_{R} bzw. die Materialschmelze Ms bzw. das Rohmaterial R_{W} hat in der Mehrwellenschneckenmaschine 6 von der Zuführöffnung 57 bis zu der Abführöffnung 73 eine mittlere Verweilzeit tv. Für die mittlere Verweilzeit tv gilt: 15 s≤tᵥ≤ 90 s, insbesondere 20 s≤tᵥ≤70 s, und insbesondere 25 s≤ tᵥ ≤ 50 s. Das ausgetragene Rohmaterial Rw wird anschließend mittels der Filtervorrichtung 7 gefiltert. Hierzu muss das Rohmaterial Rw den Schmelzefilter 74 passieren. Durch das Passieren des Schmelzefilters 74 wird die Homogenisierung des Rohmaterials Rw verbessert.

Das gefilterte Rohmaterial Rw wird entweder granuliert und als Granulat oder direkt der Folien-Herstellungsanlage 2 zugeführt. Zusätzlich wird der Folien-Herstellungsanlage 2 nicht wiederaufbereitetes Rohmaterial R zugeführt.

Die Folien-Herstellungsanlage 2 und die Wiederaufbereitungsanlage 3 werden somit im Kreislauf als Kreislauf-Produktionsanlage 1 betrieben. Durch die Wiederaufbereitungsanlage 3 wird vorzugsweise mindestens 60 %, insbesondere mindestens 80 %, insbesondere mindestens 99 % des Folien-Abfallmaterials M_{A} wiederaufbereitet. Hierdurch wird im Wesentlichen eine Zerowaste-Produktion von Folien F gewährleistet.

### Allgemein gilt:

Die Kreislauf-Produktionsanlage 1 und/oder die Folien-Herstellungsanlage 2 und/oder die Wiederaufbereitungsanlage 3 umfasst eine Steuereinrichtung zur Steuerung der Herstellung von Folien F und/oder zur Wiederaufbereitung des Folien-Abfallmaterials M_{A}. Die Steuereinrichtung ist derart ausgebildet, dass das erfindungsgemäße Verfahren zur Wiederaufbereitung von Folien-Abfallmaterial M_{A} mittels der Steuereinrichtung durchführbar ist.

## Patentansprüche

1. Verfahren zur Wiederaufbereitung von Folien-Abfallmaterial, umfassend folgende Schritte:
- Bereitstellen von Folien-Abfallmaterial (M_{A}),
- Zerkleinern des Folien-Abfallmaterials (M_{A}) zu Recyclingmaterial (M_{R}) mittels einer Zerkleinerungsvorrichtung (4),
- Zuführen des Recyclingmaterials (M_{R}) in eine Mehrwellenschneckenmaschine (6) mittels einer Zuführvorrichtung (5),
-- wobei die Zuführvorrichtung (5) eine Zuführschneckenmaschine (15) umfasst,
-- wobei die Zuführschneckenmaschine (15) eine freie Querschnittsfläche A₁ und die Mehrwellenschneckenmaschine (6) eine freie Querschnittsfläche A₂ haben, wobei gilt: A₁ > A₂,
- Plastifizieren des Recyclingmaterials (M_{R}) zu einer Materialschmelze (Ms) mittels der Mehrwellenschneckenmaschine (6), und
- Aufbereiten der Materialschmelze (Ms) mittels der Mehrwellenschneckenmaschine (6) zu Rohmaterial (Rw).

2. Verfahren nach Anspruch 1, **dadurch gekennzeichnet,**
**dass** das Zerkleinern bei einer Temperatur T erfolgt, wobei gilt:
T ≤ 100 °C, insbesondere T ≤ 90 °C, insbesondere T ≤ 80 °C, und insbesondere T ≤ 70 °C.

3. Verfahren nach Anspruch 1 oder 2, **dadurch gekennzeichnet,**
**dass** das Recyclingmaterial (M_{R}) ein Schüttdichte p hat, wobei gilt:
10 g/dm³ ≤ ρ ≤ 300 g/dm³, insbesondere 15 g/dm³ ≤ ρ ≤ 250 g/dm³, und insbesondere 20 g/dm³ ≤ ρ ≤ 200 g/dm³.

4. Verfahren nach mindestens einem der vorangegangenen Ansprüche,
**dadurch gekennzeichnet,**
**dass** das Recyclingmaterial (M_{R}) mittels eines Siebs (77) gesiebt wird, wobei das Sieb (77) insbesondere eine Siebgröße S hat und gilt: 1 mm ≤ S ≤ 50 mm, insbesondere 5 mm ≤ S ≤ 35 mm, und insbesondere 10 mm ≤ S ≤ 20 mm.

5. Verfahren nach mindestens einem der vorangegangenen Ansprüche,
**dadurch gekennzeichnet,**
**dass** die Zuführvorrichtung (5) eine Fördereinrichtung (13) umfasst.

6. Verfahren nach mindestens einem der vorangegangenen Ansprüche,
**dadurch gekennzeichnet,**
**dass** die Zuführvorrichtung (5) eine Dosiereinrichtung (14) umfasst.

7. Verfahren nach mindestens einem der vorangegangenen Ansprüche,
**dadurch gekennzeichnet,**
**dass** für A₁/A₂ gilt: 1,3≤A₁/A₂ ≤ 5, insbesondere 1,5≤A₁/A₂≤4, insbesondere 1,7≤A₁/A₂≤3,5, und insbesondere 1,8 ≤A₁/A₂≤3.

8. Verfahren nach mindestens einem der vorangegangenen Ansprüche,
**dadurch gekennzeichnet,**
**dass** die Zuführschneckenmaschine (15) einen Schneckenaußendurchmesser Dₐ₁ und die Mehrwellenschneckenmaschine (6) einen Schneckenaußendurchmesser Dₐ₂ haben, wobei gilt: Dₐ₁ ≥ Dₐ₂, insbesondere 1,05≤Dₐ₁/Dₐ₂≤1,9, insbesondere 1,1≤ Dₐ₁/Dₐ₂≤1,7, und insbesondere 1,15≤Dₐ₁/Dₐ₂≤1,5.

9. Verfahren nach mindestens einem der vorangegangenen Ansprüche,
**dadurch gekennzeichnet,**
**dass** die Zuführschneckenmaschine (15) einen Schneckenaußendurchmesser Dₐ₁ und einen Schneckeninnendurchmesser Dᵢ₁ hat, wobei gilt: Dₐ₁/Dᵢ₁ ≥ 1,7, insbesondere Dₐ₁/Dᵢ₁ ≥ 1,8, und insbesondere Dₐ₁/Dᵢ₁ ≥ 1,9.

10. Verfahren nach mindestens einem der vorangegangenen Ansprüche,
**dadurch gekennzeichnet,**
**dass** die Zuführvorrichtung (5) eine Saugeinrichtung (16) zum Verdichten des Recyclingmaterials (M_{R}) umfasst.

11. Verfahren nach mindestens einem der vorangegangenen Ansprüche, **gekennzeichnet**
**durch** ein Entgasen der Materialschmelze (Ms) in der Mehrwellenschneckenmaschine (6).

12. Verfahren nach mindestens einem der vorangegangenen Ansprüche, **dadurch gekennzeichnet,**
**dass** das Recyclingmaterial (M_{R}) eine mittlere Verweilzeit tv in der Mehrwellenschneckenmaschine (6) hat, wobei gilt: 15 s≤ tᵥ ≤ 90 s, insbesondere 20 s≤ tᵥ ≤70 s, und insbesondere 25 s ≤ tv ≤50 s.

13. Verfahren nach mindestens einem der vorangegangenen Ansprüche, **gekennzeichnet**
**durch** ein Filtern des Rohmaterials (Rw) mittels einer Filtervorrichtung (7).

14. Wiederaufbereitungsanlage zur Wiederaufbereitung von Folien-Abfallmaterial mit
- einer Zerkleinerungsvorrichtung (4) zum Zerkleinern des Folien-Abfallmaterials (M_{A}) zu Recyclingmaterial (M_{R}),
- einer Zuführvorrichtung (5) zum Zuführen des Recyclingmaterials (M_{R}), und
- einer Mehrwellenschneckenmaschine (6) zum Plastifizieren des Recyclingmaterials (M_{R}) zu einer Materialschmelze (Ms) und zum Aufbereiten der Materialschmelze (Ms) zu Rohmaterial (Rw),
**dadurch gekennzeichnet,**
**dass** die Zuführvorrichtung (5) eine Zuführschneckenmaschine (15) umfasst und
**dass** die Zuführschneckenmaschine (15) eine freie Querschnittsfläche A₁ und die Mehrwellenschneckenmaschine (6) eine freie Querschnittsfläche A₂ haben, wobei gilt: A₁ > A₂.

## Claims

1. A method for reprocessing film waste material, comprising the following steps:
- Providing film waste material (M_{A}),
- Comminuting the film waste material (M_{A}) into recycling material (M_{R}) by means of a comminuting device (4),
- Feeding the recycling material (M_{R}) into a multi-shaft screw machine (6) by means of a feeding device (5),
-- wherein the feeding device (5) comprises a feed screw machine (15),
-- wherein the feed screw machine (15) has a free cross-sectional area A₁ and the multi-shaft screw machine (6) has a free cross-sectional area A₂, wherein A₁ > A₂,
- Plasticizing the recycling material (M_{R}) into a material melt (Ms) by means of the multi-shaft screw machine (6), and
- Processing of the material melt (Ms) by means of the multi-shaft screw machine (6) to raw material (Rw).

2. A method according to claim 1, **characterized in**
**that** the comminution takes place at a temperature T, wherein:
T ≤ 100 °C, in particular T ≤ 90 °C, in particular T ≤ 80 °C, and in particular T ≤ 70 °C.

3. A method according to claim 1 or 2, **characterized in**
**that** the recycling material (M_{R}) has a bulk density p, wherein:
10 g/dm³ ≤ ρ ≤ 300 g/dm³, in particular 15 g/dm³ ≤ ρ ≤ 250 g/dm³, and in particular 20 g/dm³ ≤ ρ ≤ 200 g/dm³.

4. A method according to at least one of the preceding claims, **characterized in**
**that** the recycling material (M_{R}) is screened by means of a screen (77), wherein the screen (77) in particular has a screen size S and wherein: 1 mm ≤ S ≤ 50 mm, in particular 5 mm ≤ S ≤ 35 mm, and in particular 10 mm ≤ S ≤ 20 mm.

5. A method according to at least one of the preceding claims, **characterized in**
**that** the feeding device (5) comprises a conveying device (13).

6. A method according to at least one of the preceding claims, **characterized in**
**that** the feeding device (5) comprises a metering device (14).

7. A method according to at least one of the preceding claims, **characterized in**
**that** the following applies for A₁ /A₂: 1,3 ≤ A₁ /A₂ ≤ 5, in particular 1,5 ≤ A₁ /A₂ ≤ 4, in particular 1,7 ≤ A₁ /A₂ ≤ 3,5, and in particular 1,8 ≤ A₁ /A₂ ≤ 3.

8. A method according to at least one of the preceding claims, **characterized in**
**that** the feed screw machine (15) has a screw outer diameter Dₐ₁ and the multi-shaft screw machine (6) has a screw outer diameter Dₐ₂, wherein Dₐ₁ ≥ Dₐ₂, in particular 1,05 ≤ Dₐ₁ /Dₐ₂ ≤ 1,9, in particular 1,1 ≤ Dₐ₁ /Dₐ₂ ≤ 1,7, and in particular 1,15 ≤ Dₐ₁ /Dₐ₂ ≤ 1,5.

9. A method according to at least one of the preceding claims, **characterized in**
**that** the feed screw machine (15) has a screw outer diameter Dₐ₁ and a screw inner diameter Dᵢ₁, wherein Dₐ₁/Dᵢ₁ ≥ 1,7, in particular Dₐ₁/Dᵢ₁ ≥ 1,8, and in particular Dₐ₁/Dᵢ₁ ≥ 1,9.

10. A method according to at least one of the preceding claims, **characterized in**
**that** the feeding device (5) comprises a suction device (16) for compacting the recycling material (M_{R}).

11. A method according to at least one of the preceding claims, **characterized**
**by** a degassing of the material melt (Ms) in the multi-shaft screw machine (6).

12. A method according to at least one of the preceding claims, **characterized in**
**that** the recycling material (M_{R}) has an average residence time tv in the multi-shaft screw machine (6), wherein: 15 s ≤ t_{V} ≤ 90 s, in particular 20 s ≤ t_{V} ≤ 70 s, and in particular 25 s ≤ t_{V} ≤ 50 s.

13. A method according to at least one of the preceding claims, **characterized**
**by** a filtering of the raw material (Rw) by means of a filtering device (7).

14. A reprocessing installation for reprocessing film waste material with
- a comminuting device (4) for comminuting the film waste material (M_{A}) into recycling material (M_{R}),
- a feeding device (5) for feeding the recycling material (M_{R}), and
- a multi-shaft screw machine (6) for plasticizing the recycling material (M_{R}) into a material melt (Ms) and for processing the material melt (M_{S}) into raw material (R_{W}).
**characterized in**
**that** the feeding device (5) comprises a feed screw machine (15), and
**that** the feed screw machine (15) has a free cross-sectional area A₁ and the multi-shaft screw machine (6) has a free cross-sectional area A₂, wherein: A₁ > A₂ .

## Revendications

1. Procédé de recyclage de déchets de films, comprenant les étapes suivantes :
- mise à disposition de matériau de déchets de films (M_{A}),
- broyage du matériau de déchets de films (M_{A}) en matériau de recyclage (M_{R}) au moyen d'un dispositif de broyage (4),
- alimentation de matériau recyclé (M_{R}) dans une machine à vis sans fin multi-arbre (6) au moyen d'un dispositif d'alimentation (5),
-- dans lequel le dispositif d'alimentation (5) comprend une machine à vis sans fin d'alimentation (15),
-- dans lequel la machine à vis sans fin d'alimentation (15) a une surface de section libre A₁ et la machine à vis sans fin multi-arbre (6) a une surface de section libre A₂, où : A₁ > A₂,
- plastification du matériau recyclé (M_{R}) en une matière en fusion (M_{S}) au moyen de la machine à vis sans fin multi-arbre (6), et
- préparation de la matière en fusion (Ms) au moyen de la machine à vis sans fin multi-arbre (6) en matière brute (Rw).

2. Procédé selon la revendication 1, **caractérisé en ce**
**que** le broyage s'effectue à une température T, où :
T ≤ 100 °C, en particulier T ≤ 90 °C, en particulier T ≤ 80 °C, et en particulier T ≤ 70 °C.

3. Procédé selon la revendication 1 ou 2, **caractérisé en ce**
**que** le matériau recyclé (M_{R}) a une masse volumique apparente p, où :
10 g/dm³ ≤ ρ ≤ 300 g/dm³, en particulier 15 g/dm³ ≤ ρ ≤ 250 g/dm³, et en particulier 20 g/dm³ ≤ ρ ≤ 200 g/dm³.

4. Procédé selon au moins l'une quelconque des revendications précédentes, **caractérisé en ce**
**que** le matériau recyclé (M_{R}) est tamisé au moyen d'un tamis (77), le tamis (77) ayant en particulier une taille de tamis S et où : 1 mm ≤ S ≤ 50 mm, en particulier 5 mm ≤ S ≤ 35 mm, et en particulier 10 mm ≤ S ≤ 20 mm.

5. Procédé selon au moins l'une quelconque des revendications précédentes, **caractérisé en ce**
**que** le dispositif d'alimentation (5) comprend un dispositif de transport (13).

6. Procédé selon au moins l'une quelconque des revendications précédentes, **caractérisé en ce**
**que** le dispositif d'alimentation (5) comprend un dispositif de dosage (14).

7. Procédé selon au moins l'une quelconque des revendications précédentes, **caractérisé en ce**
**que,** pour A₁/A₂ , on a : 1,3 ≤ A₁/A₂ ≤ 5, en particulier 1,5 ≤ A₁/A₂ ≤ 4, en particulier 1,7 ≤ A₁/A₂ ≤ 3,5, et en particulier 1,8 ≤ A₁/A₂ ≤ 3.

8. Procédé selon au moins l'une quelconque des revendications précédentes, **caractérisé en ce**
**que** la machine à vis sans fin d'alimentation (15) a un diamètre extérieur de vis Dₐ₁ et la machine à vis sans fin multi-arbre (6) a un diamètre extérieur de vis Dₐ₂, où : Dₐ₁ ≥ Dₐ₂ , en particulier 1,05 ≤ Dₐ₁/Dₐ₂ ≤ 1,9, en particulier 1,1 ≤ Dₐ₁/Dₐ₂ ≤ 1,7, et en particulier 1,15 ≤ Dₐ₁/Dₐ₂ ≤ 1,5.

9. Procédé selon au moins l'une quelconque des revendications précédentes, **caractérisé en ce**
**que** la machine à vis sans fin d'alimentation (15) a un diamètre extérieur de vis Dₐ₁ et un diamètre intérieur de vis Dᵢ₁ , où : Dₐ₁/Dᵢ₁ ≥ 1,7, en particulier Dₐ₁/Dᵢ₁ ≥ 1,8, et en particulier Dₐ₁/Dᵢ₁ ≥ 1,9.

10. Procédé selon au moins l'une quelconque des revendications précédentes, **caractérisé en ce**
**que** le dispositif d'alimentation (5) comprend un dispositif d'aspiration (16) pour compacter le matériau recyclé (M_{R}).

11. Procédé selon au moins l'une quelconque des revendications précédentes, **caractérisé**
**par** un dégazage de la matière en fusion (Ms) dans la machine à vis sans fin multi-arbre (6).

12. Procédé selon au moins une des revendications précédentes, **caractérisé en ce**
**que** le matériau recyclé (M_{R}) a un temps de séjour moyen tv dans la machine à vis sans fin multi-arbre (6), où : 15 s ≤ tv ≤ 90 s, en particulier 20 s ≤ tv ≤ 70 s, et en particulier 25 s ≤ tv ≤ 50 s.

13. Procédé selon au moins l'une quelconque des revendications précédentes, **caractérisé**
**par** une filtration de la matière brute (R_{W}) au moyen d'un dispositif de filtration (7).

14. Installation de recyclage destinée au recyclage de déchets de films avec
- un dispositif de broyage (4) pour broyer le matériau de déchets de films (M_{A}) en matériau recyclé (M_{R}),
- un dispositif d'alimentation (5) pour alimenter le matériau recyclé (M_{R}), et
- une machine à vis sans fin multi-arbre (6) pour plastifier le matériau recyclé (M_{R}) en une matière en fusion (Ms) et pour préparer la matière en fusion (Ms) en matière brute (Rw),
**caractérisé en ce**
**que** le dispositif d'alimentation (5) comprend une machine à vis sans fin d'alimentation (15) et
**que** la machine à vis sans fin d'alimentation (15) a une surface de section libre Ai et la machine à vis sans fin multi-arbre (6) a une surface de section libre A₂, où : A₁ > A₂ .
